# EUROPEAN PATENT APPLICATION

(11) **EP 3 125 590 A1**
(43) Date of publication of application: **01.02.2017**
(21) Application number: 14887556.0
(22) Date of filing: 27.03.2014
(51) Int. Cl.: H04W 4/14, H04W 88/02

(54) **INFORMATION TRANSMITTING METHOD AND DEVICE AND INFORMATION RECEIVING METHOD AND DEVICE**

(71) Applicant: Yulong Computer Telecommunication Scientific (Shenzhen) Co. Ltd., Shenzhen, Guangdong 518057 (CN)
(72) Inventor: YANG, Fan, Shenzhen Guangdong 518057 (CN)
(74) Representative: Huang, Chongguang
(86) International application number: PCT/CN2014/074228
(87) International publication number: WO 2015/143680

(57) **Abstract**

Message sending and receiving method, message sending and receiving device are provided. The message sending method in the sending device includes: selecting, according to a selection command, a sending mode for a short message from existing sending modes which include a burn after reading mode and an ordinary mode, determining whether the short message is a multimedia message when the burn after reading mode is selected, and converting the short message to a multimedia message when the short message is not a multimedia message; inserting an attachment of burn after reading into the multimedia message, and sending the multimedia message carrying the attachment to the message receiving device, for deleting contents in the multimedia message after the multimedia message has been opened according to the attachment. The present disclosure does not save the multimedia message, but delete directly after opening, thus, privacy can be improved.

## Description

### FIELD

The embodiments of the present disclosure relate to client terminal technology, and specifically to a message sending method, a message receiving method, a message sending device, and a message receiving device.

### BACKGROUND

With the popularity of mobile phones, security requirements and privacy requirements to the mobile phones are increasing gradually. Multimedia messages are an important communication means, and privacy requirement of the multimedia message have attracted more and more attentions from users.

Currently, multimedia messages received by terminals (such as mobile phones) are saved automatically into the mobile phones. For privacy multimedia messages, users usually need to click a "menu", and select a "delete" option to delete the multimedia message. For some mobile phones, the multimedia messages may be moved to a trash can after a first deletion. Thus, to clear the multimedia messages thoroughly, the user needs to go to the trash can to delete the firstly-deleted multimedia messages again. Such operations are troublesome for users.

Therefore, improving privacy of the multimedia message communication is problematic.

### SUMMARY OF THE INVENTION

To solve the above problem, the present disclosure provides a new way of sending messages, which can bring about deletion of multimedia messages directly after the multimedia message has been opened. The multimedia messages would not be saved, thus, privacy of the multimedia messages can be improved.

Therefore, according to one aspect of the present disclosure, a message sending method is provided. The method is executed in a message sending device, and includes: selecting a target sending mode for a short message to be sent in existing sending modes according to a selection command, where the existing sending modes include a burn after reading sending mode and an ordinary sending mode; determining whether the short message is a multimedia message when the target sending mode is the burn after reading sending mode, and converting the short message to a multimedia message when the short message is not a multimedia message; inserting an attachment of burn after reading into the multimedia message, and sending the multimedia message carrying the attachment to a message receiving device, for the message receiving device to delete contents included in the multimedia message after opening, according to the attachment.

In the above embodiment, different sending modes can be selected for a short message according to the selection command, thus flexibility and interest in the message sending modes can be improved. Moreover, when the sending mode of the short message is the burn after reading sending mode, it is determined whether the short message is a multimedia message. If the short message is not a multimedia message, the short message is converted to a multimedia message. An attachment of burn after reading is inserted into the multimedia message, and then the multimedia message carrying the attachment of burn after burn is sent using the burn after reading sending mode. When the multimedia message carrying the attachment of burn after reading is received, the contents included in the multimedia message will be deleted directly when the multimedia message is closed. In prior art, the multimedia message needs to be deleted by users manually. Compared with the prior art, the present embodiment does not save the multimedia message. Thus, the multimedia message cannot be leaked out. Privacy of the multimedia message is improved.

The multimedia message is sent in a form of pictures and/or attachments. Thus, when the selected sending mode is the burn after reading sending mode, an attachment of burn after reading is inserted into the multimedia message. The attachment of burn after reading can be named as "burn after reading. DAT", which can intuitively indicate that the multimedia message will be sent using the burn after reading sending mode, and further indicate that the contents included in the multimedia message will be deleted directly when the multimedia message is closed.

In the above embodiment, preferably, the method further includes: inserting a tag of burn after reading into the short message when the sending mode of the short message to be sent is the burn after reading sending mode; and displaying the tag of burn after reading in a message window.

In the above embodiment, when the selected sending mode is the burn after reading sending mode, by inserting the tag of burn after reading in the short message to be sent and showing the tag in the message window, a sending user can view the sending mode of the short message to be sent intuitively. Thus, the user can be reminded that the short message will be sent in the burn after reading sending mode.

The tag of burn after reading may be a special icon, such as 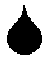 (a flame symbol, representing burn after reading). That is, the icon 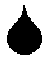 is inserted before the first character of the short message when inserting the tag of burn after reading into the short message. One skilled person in the art knows that the tag of burn after reading and the insertion location of the tag are not limited by the embodiments above.

In the above embodiment, preferably, the method further includes converting the short message, which includes the tag of burn after reading, into a multimedia message when the short message is not a multimedia message; and inserting an attachment of burn after reading into the multimedia message to replace the tag of burn after reading.

The above embodiment converts the short message including the tag of burn after reading into a multimedia message, and inserts an attachment of burn after reading into the multimedia message, thus, enables the multimedia message to be deleted after opening. It may be understood that, if the short message is originally a multimedia message, there is no need for the conversion. An attachment of burn after reading is inserted into the original multimedia message to realize deletion of the original multimedia messages after opening.

In the above embodiment, preferably, the method further includes: sending the short message to the message receiving device as normal, upon condition that the target sending mode is the ordinary sending mode.

In the above embodiment, when the selected sending mode is the ordinary sending mode, the multimedia message is sent as normal. For the multimedia messages which not need to be deleted after opening, the message receiving device can save the multimedia messages as normal.

According to a second aspect of the present disclosure, a message receiving method is provided. The message receiving method is executed in a message receiving device and includes: receiving a multimedia message sent by a message sending device; determining whether the multimedia message includes an attachment of burn after reading; and deleting contents included in the multimedia message after the multimedia message has been opened upon a close or exit command being received, when the multimedia message includes an attachment of burn after reading.

The above embodiment determines whether the received multimedia message includes the attachment of burn after reading. When the received multimedia message includes the attachment of burn after reading, and when the close or exit command is received after the multimedia message has been opened, the contents included in the multimedia message is deleted directly. In prior art, the received multimedia message is saved. Compared with the prior art, the present embodiment doesn't save the multimedia message which includes the attachment of burn after reading. Thus, the content of the multimedia message is protected against being leaked out, and privacy of the multimedia message can be improved.

In the above embodiment, preferably, the method further includes displaying the multimedia message which includes the attachment of burn after reading. The multimedia message is shown in a first style when the multimedia message is received but unopened, and the multimedia message is shown in a second style when the multimedia message has been opened.

The above embodiment shows two styles of a multimedia message which includes the attachment of burn after reading. The two styles correspond to opened and unopened of the multimedia message. Thus, it is easy to see whether the multimedia message has been opened or not. Furthermore, when a plurality of multimedia messages of burn after reading are received at the same time, it is easy to distinguish which of the plurality of multimedia messages has been opened and which of the plurality of multimedia messages remains unopened according to the styles. Namely, which of the plurality of multimedia messages has been deleted can be distinguished according to the different styles. If a multimedia message has not been opened, the multimedia message can be opened. If the multimedia message has been opened, the multimedia message is shown in the second style, and everything included in the multimedia message, including a sender, a sending time, and contents, cannot be read again, because the contents included in the multimedia message has been deleted.

In the above embodiment, preferably, the method further includes: setting the first style and/or the second style according to a setting command.

The above embodiment can set the first style and the second style freely, thus flexibility of showing the multimedia message is improved. For example, the first style can be set as a bulging envelope visual style, and the second style can be set as an empty envelope visual style. Also, the first style can be set as an envelope style with a tag of burn after reading, and the second style can be set as an envelope style which is torn in two pieces. It may be understood that, the styles are not limited by the examples above.

According to a third aspect of the present disclosure, a message sending device is provided. The message sending device includes: a selection unit, which selects a target sending mode for a short message to be sent in existing sending modes, according to a selection command, where the existing sending modes include a burn after reading sending mode and an ordinary sending mode; a determination unit, which determines whether the short message is a multimedia message, when the target sending mode is the burn after reading sending mode; a converting unit, which converts the short message to a multimedia message when the short message is not a multimedia message; a tag inserting unit, which inserts an attachment of burn after reading into the multimedia message; and a sending unit, which sends the multimedia message carrying the attachment to a message receiving device, for the message receiving device to delete contents included in the multimedia message after multimedia message has been opened, according to the attachment.

In the above embodiment, different sending modes can be selected for a short message according to the selection command, thus flexibility and interest in message sending modes can be improved. Moreover, when the sending mode of the short message is the burn after reading sending mode, it is determined whether the short message is a multimedia message. If the short message is not a multimedia message, the short message is converted to a multimedia message. An attachment of burn after reading is inserted into the multimedia message, and then the multimedia message carrying the attachment of burn after burn is sent using the burn after reading sending mode. When the multimedia message carrying the attachment of burn after reading is received, the contents included in the multimedia message will be deleted directly when the multimedia message is closed. In prior art, the multimedia message needs to be deleted by users manually. Compared with the prior art, the present embodiment does not save the multimedia message. Thus, the multimedia message cannot be leaked out. Privacy of the multimedia message is improved.

The multimedia message is sent in a form of pictures and/or attachments. Thus, when the selected sending mode is the burn after reading sending mode, an attachment of burn after reading is inserted into the multimedia message. The attachment of burn after reading can be named as "burn after reading. DAT", which can intuitively indicate that the multimedia message will be sent using the burn after reading sending mode, and further indicate that the multimedia message will be deleted directly when the multimedia message is closed.

In the above embodiment, preferably, the tag inserting unit is further used to: insert a tag of burn after reading in the short message when the sending mode of the short message to be sent is the burn after reading sending mode; and the tag inserting unit further includes: a tag showing unit, which shows the tag of burn after reading in a message window.

In the above embodiment, when the selected sending mode is the burn after reading sending mode, by inserting the tag of burn after reading in the short message to be sent and showing the tag in the message window, a sending user can view the sending mode of the short message to be sent intuitively. Thus, the user can be reminded that the short message will be sent in the burn after reading sending mode.

The tag of burn after reading may be a special icon, such as 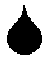 (a flame symbol, representing burn after reading). That is, the icon 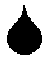 is inserted before the first character of the short message when inserting the tag of burn after reading into the short message. One skilled person in the art knows that the tag of burn after reading and the insertion location of the tag are not limited by the embodiments above.

In the above embodiment, preferably, the converting unit is further used to: convert the short message, which includes the tag of burn after reading, into a multimedia message, when the short message is not a multimedia message; and the tag inserting unit further includes: a replacing unit, which inserts an attachment of burn after reading into the multimedia message to replace the tag of burn after reading.

The above embodiment converts the short message including the tag of burn after reading into a multimedia message, and inserts an attachment of burn after reading into the multimedia message, thus, enables the multimedia message to be deleted after opening. It may be understood that, if the short message is originally a multimedia message, there is no need for the conversion. An attachment of burn after reading is inserted into the original multimedia message to realize deletion of the original multimedia messages after opening.

In the above embodiment, preferably, the sending unit is further used to: send the short message to the message receiving device as normal, when the target sending mode is the ordinary sending mode.

In the above embodiment, when the selected sending mode is the ordinary sending mode, the multimedia message is sent as normal. For the multimedia messages which do not need to be deleted after opening, the message receiving device can save the multimedia messages as normal.

According to a fourth aspect of the present disclosure, a message receiving device is provided. The message receiving device includes: a receiving unit, which receives a multimedia message sent by a message sending device; a determination unit, which determines whether the multimedia message includes an attachment of burn after reading; a processing unit, which deletes contents included in the multimedia message after the multimedia message has been opened upon a close or exit command being received, when the multimedia message includes an attachment of burn after reading.

The above embodiment determines whether the received multimedia message includes the attachment of burn after reading. When the received multimedia message includes the attachment of burn after reading, and when the close or exit command is received after the multimedia message is opened, the multimedia message is deleted directly. In prior art, the received multimedia message is saved. Compared with the prior art, the present embodiment doesn't save the multimedia message which includes the attachment of burn after reading. Thus, the content of the multimedia message is protected against being leaked out, and privacy of the multimedia message can be improved.

In the above embodiment, preferably, the message receiving device further includes a display unit, which displays the multimedia message which includes the attachment of burn after reading. The multimedia message is shown in a first style when the multimedia message is received but unopened, and the multimedia message is shown in a second style when the multimedia message is opened.

The above embodiment shows two styles of a multimedia message which includes the attachment of burn after reading. The two styles correspond to opened and unopened of the multimedia message. Thus, it is easy to see whether the multimedia message is opened or not. Furthermore, when a plurality of multimedia messages of burn after reading are received at the same time, it is easy to distinguish which of the plurality of multimedia messages has been opened and which of the plurality of multimedia messages remains unopened according to the styles. Namely, which of the plurality of multimedia messages has been deleted can be distinguished according to the different styles. If a multimedia message is not opened, the multimedia message can be opened. If the multimedia message has been opened, the multimedia message is shown in the second style, and everything included in the multimedia message, including a sender, a sending time, and contents, cannot be read again, because the multimedia message has been deleted.

In the above embodiment, preferably, the message receiving device further includes: a setting unit, which sets the first style and/or the second style according to a setting command.

The above embodiment can set the first style and the second style freely, thus flexibility of showing the multimedia message is improved. For example, the first style can be set as a bulging envelope visual style, and the second style can be set as an empty envelope visual style. Also, the first style can be set as an envelope style with a tag of burn after reading, and the second style can be set as an envelope style which is torn in two pieces. It may be understood that, the styles are not limited by the examples above.

### BRIEF DESCRIPTION OF THE DRAWINGS

FIG. 1 is a schematic flowchart of one embodiment of a message sending method.
FIG. 2 is a schematic flowchart of another embodiment of a message sending method.
FIG. 3 is a schematic flowchart of one embodiment of a message receiving method.
FIG. 4 is a schematic flowchart of another embodiment of a message receiving method.
FIG. 5 shows a schematic structure of an exemplary embodiment of a message sending device.
FIG. 6 shows a schematic structure of an exemplary embodiment of a message receiving device.

### DETAILED DESCRIPTION

For simplicity and clarity of illustration, where appropriate, the above drawings illustrate the embodiments. It may be appreciated that different embodiments and elements in the different embodiment of the present disclosure can be combined, when there is no complicit.

The embodiments described herein are for better understanding of the present disclosure, other embodiments can also be practiced. The description is not to be considered as limiting the scope of the embodiments described herein.

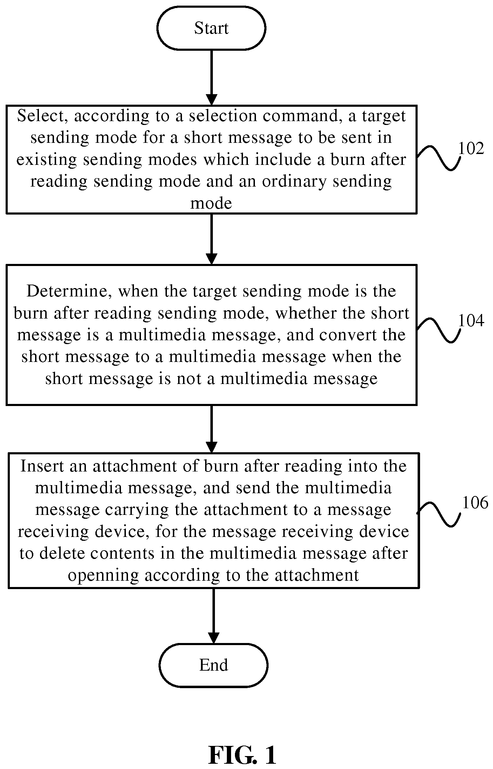

FIG. 1 is a schematic flowchart of one embodiment of a message sending method. The message sending method is applied in a message sending device, and includes: step 102, selecting a target sending mode for a short message to be sent in existing sending modes according to a selection command, where the existing sending modes include a burn after reading sending mode and an ordinary sending mode; step 104, determining whether the short message is a multimedia message when the target sending mode is the burn after reading sending mode, and converting the short message to a multimedia message when the short message is not a multimedia message; step 106, inserting an attachment of burn after reading into the multimedia message, and sending the multimedia message carrying the attachment to a message receiving device, for the message receiving device to delete contents included in the multimedia message after opening, according to the attachment.

In the above embodiment, different sending modes can be selected for a short message according to the selection command, thus flexibility and interest in message sending modes can be improved. Moreover, when the sending mode of the short message is the burn after reading sending mode, it is determined whether the short message is a multimedia message. If the short message is not a multimedia message, the short message is converted to a multimedia message. An attachment of burn after reading is inserted into the multimedia message, and then the multimedia message carrying the attachment of burn after burn is sent using the burn after reading sending mode. When the multimedia message carrying the attachment of burn after reading is received, the contents included in the multimedia message will be deleted directly when the multimedia message is closed. In prior art, the multimedia message needs to be deleted by users manually. Compared with the prior art, the present embodiment does not save the multimedia message. Thus, the multimedia message cannot be leaked out. Privacy of the multimedia message is improved.

The multimedia message is sent in a form of pictures and/or attachments. Thus, when the selected sending mode is the burn after reading sending mode, an attachment of burn after reading is inserted into the multimedia message. The attachment of burn after reading can be named as "burn after reading. DAT", which can intuitively indicate that the multimedia message will be sent using the burn after reading sending mode, and further indicate that the contents included in the multimedia message will be deleted directly when the multimedia message is closed.

In the above embodiment, preferably, the method further includes: inserting a tag of burn after reading in the short message when the sending mode of the short message to be sent is the burn after reading sending mode; and showing the tag of burn after reading in a message window.

In the above embodiment, when the selected sending mode is the burn after reading sending mode, by inserting the tag of burn after reading in the short message to be sent and showing the tag in the message window, a sending user can view the sending mode of the short message to be sent intuitively. Thus, the user can be reminded that the short message will be sent in the burn after reading sending mode.

The tag of burn after reading may be a special icon, such as 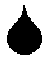 (a flame symbol, representing burn after reading). That is, the icon 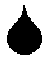 is inserted before the first character of the short message when inserting the tag of burn after reading into the short message. One skilled person in the art knows that the tag of burn after reading and the insertion location of the tag are not limited by the embodiments above.

In the above embodiment, preferably, the method further includes converting the short message, which includes the tag of burn after reading, into a multimedia message when the short message is not a multimedia message; and inserting an attachment of burn after reading into the multimedia message to replace the tag of burn after reading.

The above embodiment converts the short message including the tag of burn after reading into a multimedia message, and inserts an attachment of burn after reading into the multimedia message, thus, enables the multimedia message to be deleted after opening. It may be understood that, if the short message is originally a multimedia message, there is no need for the conversion. An attachment of burn after reading is inserted into the original multimedia message to realize deletion of the original multimedia messages after opening.

In the above embodiment, preferably, the method further includes: sending the short message to the message receiving device as normal, upon condition that the target sending mode is the ordinary sending mode.

In the above embodiment, when the selected sending mode is the ordinary sending mode, the multimedia message is sent as normal. For the multimedia messages which not need to be deleted after opening, the message receiving device can save the multimedia messages as normal.

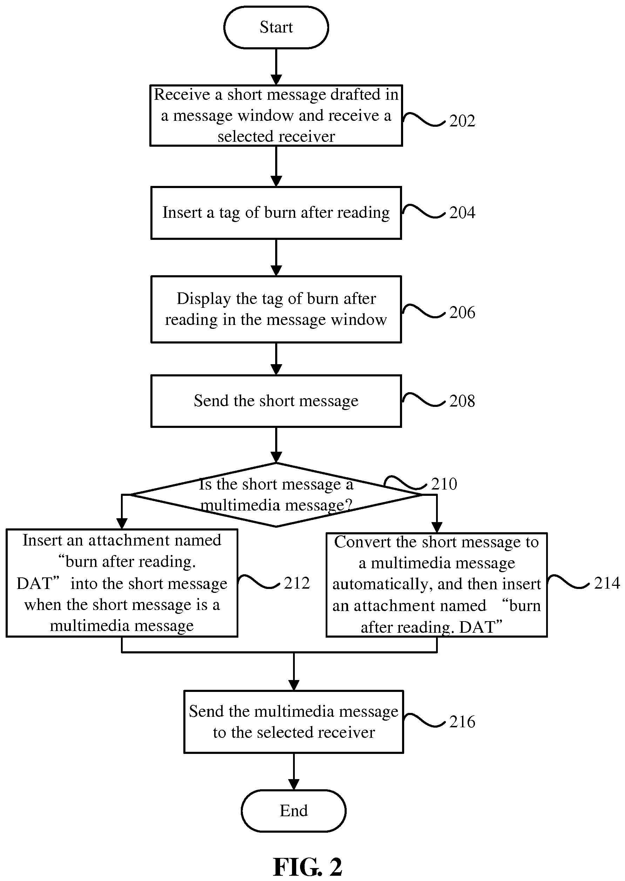

FIG. 2 is a schematic flowchart of another embodiment of a message sending method.

Referring to FIG. 2, according to the present embodiment, another embodiment of a message sending method includes:
Step 202, a short message drafted by a user is received in a message window and a selected receiver and a selected sending mode are also received. The sending mode includes a burn after reading sending mode and an ordinary sending mode.
Step 204, an "inserting" menu is selected to insert a tag of burn after reading into the short message, when the selected sending mode is the burn after reading sending mode. If the selected sending mode is the ordinary sending mode, the short message cannot be deleted after opening.
Step 206, the tag of burn after reading is shown in the message window when the tag is inserted into the short message, for reminding the user that the short message is to be sent to the receiver using the burn after reading sending mode.
Step 208, a message sending button is selected to send the short message.
Step 210, it is determined whether the short message is a multimedia message. Step 212 is implemented under the condition that the short message is a multimedia message. Step 214 is implemented under the condition that the short message is not a multimedia message.
Step 212, it is determined that the short message is a multimedia message, and an attachment named as "burn after reading. DAT" is inserted into the short message.
Step 214, it is determined that the short message is an ordinary short message, the short message is converted to a multimedia message firstly, and then, an attachment of burn after reading is inserted into the multimedia message.
Step 216, the multimedia message carrying the attachment of burn after reading is sent to the selected receiver.

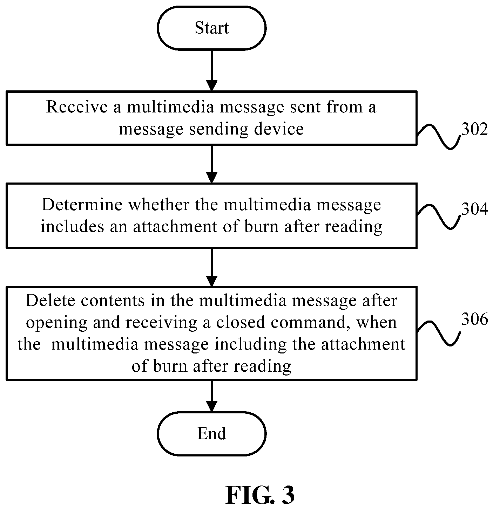

FIG. 3 is a schematic flowchart of one embodiment of a message receiving method.

Referring to FIG. 3, according to the present embodiment, the message receiving method is applied in a message receiving device and includes: step 302, receiving a multimedia message sent by a message sending device; step 304, determining whether the multimedia message includes an attachment of burn after reading; step 306, deleting contents included in the multimedia message after the multimedia message has been opened upon a close or exit command being received, when the multimedia message includes an attachment of burn after reading.

The above embodiment determines whether the received multimedia message includes the attachment of burn after reading. When the received multimedia message includes the attachment of burn after reading, and when a close or exit command is received after the multimedia message has been opened, the contents included in the multimedia message is deleted directly. In prior art, the received multimedia message is saved. Compared with the prior art, the present embodiment doesn't save the multimedia message which includes the attachment of burn after reading. Thus, the content of the multimedia message is protected against being leaked out, and privacy of the multimedia message can be improved.

In the above embodiment, preferably, the method further includes displaying the multimedia message which includes the attachment of burn after reading. The multimedia message is shown in a first style when the multimedia message is received but unopened, and the multimedia message is shown in a second style when the multimedia message is opened.

The above embodiment shows two styles of a multimedia message which includes the attachment of burn after reading. The two styles correspond to opened and unopened of the multimedia message. Thus, it is easy to see whether the multimedia message is opened or not. Furthermore, when a plurality of multimedia messages of burn after reading are received at the same time, it is easy to distinguish which of the plurality of multimedia messages has been opened and which of the plurality of multimedia messages remains unopened according to the styles. Namely, which of the plurality of multimedia messages has been deleted can be distinguished according to the different styles. If a multimedia message is not opened, the multimedia message can be opened to read. If the multimedia message has been opened, the multimedia message is shown in the second style, and everything included in the multimedia message, including a sender, a sending time, and contents, cannot be read again, because the contents included in the multimedia message has been deleted.

In the above embodiment, preferably, the method further includes: setting the first style and/or the second style according to a setting command.

The above embodiment can set the first style and the second style freely, thus flexibility of showing the multimedia message is improved. For example, the first style can be set as a bulging envelope visual style, and the second style can be set as an empty envelope visual style. Also, the first style can be set as an envelope style with a tag of burn after reading, and the second style can be set as an envelope style which is torn in two pieces. It may be understood that, the styles are not limited by the examples above.

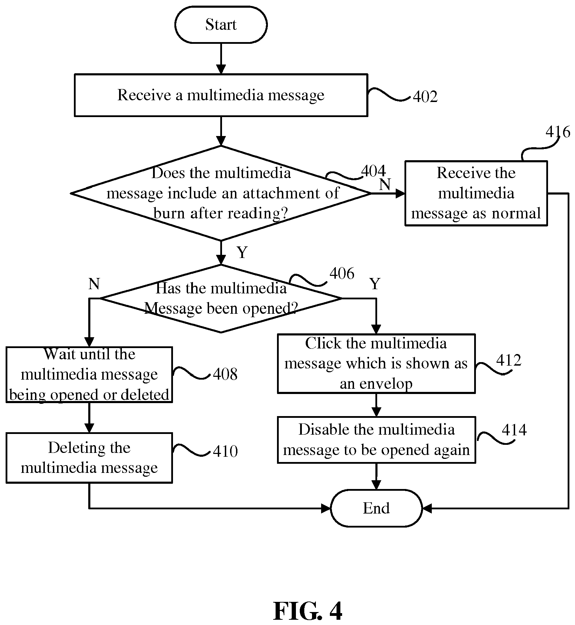

FIG. 4 is a schematic flowchart of another embodiment of a message receiving method.

Referring to FIG. 4, according to the present embodiment, the message receiving method includes:
Step 402, a multimedia message is received ordinarily.
Step 404, it is determined whether the multimedia message includes an attachment of burn after reading, which can be named as "burn after reading. DAT". Step 406 is implemented upon the condition that the multimedia message includes the attachment of burn after reading. Otherwise, step 416 is implemented under the condition that the multimedia message does not include the attachment of burn after reading.
Step 406, it is further determined whether the multimedia message has been opened when the multimedia message includes the attachment of burn after reading. Step 412 is implemented under the condition that the multimedia message has been opened. Otherwise, step 408 is implemented under the condition that the multimedia message has not been opened.
Step 408, the multimedia message is shown as unopened (the first style), and waits until being opened.
Step 410, the multimedia message of burn after reading can be deleted as an ordinary multimedia message, no matter whether the multimedia message has been opened or unopened. After being deleted, the multimedia message of burn after reading cannot be opened again.
Step 412, the multimedia message is clicked to be opened when there is a need to read the multimedia message.
Step 414, the style of the multimedia message changes from unopened to opened, and a flash of burning an envelope is playing when a message window of the multimedia message is closed or existed. The flash can represent burn after reading of the multimedia message. After opening, the multimedia message can be shown in the second style, and cannot be opened again.
Step 416, the multimedia message is received ordinarily when the multimedia message does not include the attachment of burn after reading.

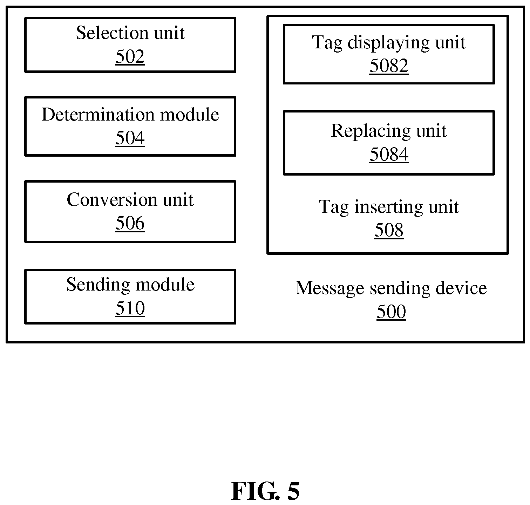

FIG. 5 shows a schematic structure of an exemplary embodiment of a message sending device.

Referring to FIG. 5, a message sending device 500 according to the present embodiment includes: a selection unit 502, which selects a target sending mode for a short message to be sent in existing sending modes, according to a selection command, where the existing sending modes include a burn after reading sending mode and an ordinary sending mode; a determination unit 504, which determines whether the short message is a multimedia message, when the target sending mode is the burn after reading sending mode; a converting unit 506, which converts the short message to a multimedia message when the short message is not a multimedia message; a tag inserting unit 508, which inserts an attachment of burn after reading into the multimedia message; and a sending unit 510, which sends the multimedia message carrying the attachment to a message receiving device, for the message receiving device to delete contents included in the multimedia message after it has been opened, according to the attachment.

In the above embodiment, different sending modes can be selected for a short message according to the selection command, thus flexibility and interest in message sending modes can be improved. Moreover, when the sending mode of the short message is the burn after reading sending mode, it is determined whether the short message is a multimedia message. If the short message is not a multimedia message, the short message is converted to a multimedia message. An attachment of burn after reading is inserted into the multimedia message, and then the multimedia message carrying the attachment of burn after burn is sent using the burn after reading sending mode. When the multimedia message carrying the attachment of burn after reading is received, the contents included in the multimedia message will be deleted directly when the multimedia message is closed. In prior art, the multimedia message needs to be deleted by users manually. Compared with the prior art, the present embodiment does not save the multimedia message. Thus, the multimedia message cannot be leaked out. Privacy of the multimedia message is improved.

The multimedia message is sent in a form of pictures and/or attachments. Thus, when the selected sending mode is the burn after reading sending mode, an attachment of burn after reading is inserted into the multimedia message. The attachment of burn after reading can be named as "burn after reading. DAT", which can intuitively indicate that the multimedia message will be sent using the burn after reading sending mode, and further indicate that the multimedia message will be deleted directly when the multimedia message is closed.

In the above embodiment, preferably, the tag inserting unit 508 is further used to: insert a tag of burn after reading in the short message when the sending mode of the short message to be sent is the burn after reading sending mode; and the tag inserting unit 508 further includes: a tag showing unit 5082, which shows the tag of burn after reading in a message window.

In the above embodiment, when the selected sending mode is the burn after reading sending mode, by inserting the tag of burn after reading in the short message to be sent and showing the tag in the message window, a sending user can view the sending mode of the short message to be sent intuitively. Thus, the user can be reminded that the short message will be sent in the burn after reading sending mode.

The tag of burn after reading may be a special icon, such as 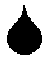 (a flame symbol, representing burn after reading). That is, the icon 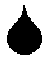 is inserted before the first character of the short message when inserting the tag of burn after reading into the short message. One skilled person in the art knows that the tag of burn after reading and the insertion location of the tag are not limited by the embodiments above.

In the above embodiment, preferably, the converting unit 506 is further used to: convert the short message, which includes the tag of burn after reading, into a multimedia message, when the short message is not a multimedia message; and the tag inserting unit 508 further includes: a replacing unit 5084, which inserts an attachment of burn after reading into the multimedia message to replace the tag of burn after reading.

The above embodiment converts the short message including the tag of burn after reading into a multimedia message, and inserts an attachment of burn after reading into the multimedia message, thus, enables the multimedia message to be deleted after opening. It may be understood that, if the short message is originally a multimedia message, there is no need for the conversion. An attachment of burn after reading is inserted into the original multimedia message to realize deletion of the original multimedia messages after opening.

In the above embodiment, preferably, the sending unit 510 is further used to: send the short message to the message receiving device as normal, when the target sending mode is the ordinary sending mode.

In the above embodiment, when the selected sending mode is the ordinary sending mode, the multimedia message is sent as normal. For the multimedia messages which do not need to be deleted after opening, the message receiving device can save the multimedia messages as normal.

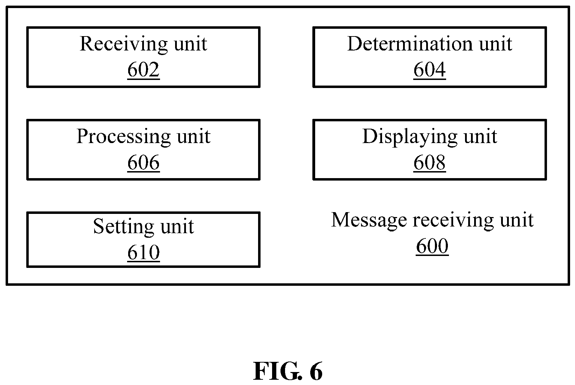

FIG. 6 shows a schematic structure of an exemplary embodiment of a message receiving device.

Referring to FIG. 6, a message receiving device 600 according to the present embodiment, includes: a receiving unit 602, which receives a multimedia message sent by the message sending device 500; a determination unit 604, which determines whether the multimedia message includes an attachment of burn after reading; a processing unit 606, which deletes contents included in the multimedia message after the multimedia message has been opened upon a close or exit command being received, when the multimedia message includes an attachment of burn after reading.

The above embodiment determines whether the received multimedia message includes the attachment of burn after reading. When the received multimedia message includes the attachment of burn after reading, and when a close or exit command is received after the multimedia message is opened, the multimedia message is deleted directly. In prior art, the received multimedia message is saved. Compared with the prior art, the present embodiment doesn't save the multimedia message which includes the attachment of burn after reading. Thus, the content of the multimedia message is protected against being leaked out, and privacy of the multimedia message can be improved.

The above embodiment, preferably, further includes: a showing unit 608, which displays the multimedia message which includes the attachment of burn after reading. The multimedia message is shown in a first style when the multimedia message is received but unopened, and the multimedia message is shown in a second style when the multimedia message is opened.

The above embodiment shows two styles of a multimedia message which includes the attachment of burn after reading. The two styles correspond to opened and unopened of the multimedia message. Thus, it is easy to see whether the multimedia message is opened or not. Furthermore, when a plurality of multimedia messages of burn after reading are received at the same time, it is easy to distinguish which of the plurality of multimedia messages has been opened and which of the plurality of multimedia messages remains unopened according to the styles. Namely, which of the plurality of multimedia messages has been deleted can be distinguished according to the different styles. If a multimedia message is not opened, the multimedia message can be opened to read. If the multimedia message has been opened, the multimedia message is shown in the second style, and everything included in the multimedia message, including a sender, a sending time, and contents, cannot be read again, because the multimedia message has been deleted.

The above embodiment, preferably, further includes: a setting unit 610, which sets the first style and/or the second style according to a setting command.

The above embodiment can set the first style and the second style freely, thus flexibility of showing the multimedia message is improved. For example, the first style can be set as a bulging envelope visual style, and the second style can be set as an empty envelope visual style. Also, the first style can be set as an envelope style with a tag of burn after reading, and the second style can be set as an envelope style which is torn in two pieces. It may be understood that, the styles are not limited by the examples above.

The above embodiments and drawings are set forth in order to provide a thorough understanding of the present disclosure. According to the embodiments above, the present disclosure can select a sending mode for a multimedia message flexibly. The multimedia message of burn after reading can be deleted directly when the multimedia message is closed. The multimedia message cannot be saved, thus, privacy of the multimedia message is improved.

According to the present disclosure, a program product stored in a non-transitory computer readable medium is provided. The program product is used to send message in a terminal, and includes instructions executable by a computer system to perform the following steps: selecting a target sending mode for a short message to be sent in existing sending modes according to a selection command, where the existing sending modes include a burn after reading sending mode and an ordinary sending mode; determining whether the short message is a multimedia message when the target sending mode is the burn after reading sending mode, and converting the short message to a multimedia message when the short message is not a multimedia message; inserting an attachment of burn after reading into the multimedia message, and sending the multimedia message carrying the attachment to a message receiving device, for the message receiving device to delete contents included in the multimedia message after opening, according to the attachment.

According to the present disclosure, a non-transitory computer readable medium is also provided. The non-transitory computer readable medium stores a program product which is used to send message in a terminal and includes instructions executable by a computer system to perform the following steps: selecting a target sending mode for a short message to be sent in existing sending modes according to a selection command, where the existing sending modes include a burn after reading sending mode and an ordinary sending mode; determining whether the short message is a multimedia message when the target sending mode is the burn after reading sending mode, and converting the short message to a multimedia message when the short message is not a multimedia message; inserting an attachment of burn after reading into the multimedia message, and sending the multimedia message carrying the attachment to a message receiving device, for the message receiving device to delete contents included in the multimedia message after opening and reading, according to the attachment.

According to the present disclosure, a program readable by a machine is also provided. When executed by the machine, the program can cause the machine to perform a message sending method of any of the above mentioned embodiments.

According to the present disclosure, a storage medium which stores a program readable by a machine is also provided. When executing the program, the machine can perform a message sending method of any of the above mentioned embodiments.

According to the present disclosure, a program product stored in a non-transitory computer readable medium is provided. The program product is used to receive messages in a terminal, and includes instructions executable by a computer system to perform the following steps: receiving a multimedia message sent by a message sending device; determining whether the multimedia message includes an attachment of burn after reading; and deleting contents included in the multimedia message after the multimedia message has been opened upon a close or exit command being received, when the multimedia message includes an attachment of burn after reading.

According to the present disclosure, a non-transitory computer readable medium is also provided. The non-transitory computer readable medium stores a program product which is used to send message in a terminal and includes instructions executable by a computer system to perform the following steps: receiving a multimedia message sent by a message sending device; determining whether the multimedia message includes an attachment of burn after reading; and deleting contents included in the multimedia message after the multimedia message has been opened upon a close or exit command being received, when the multimedia message includes an attachment of burn after reading.

According to the present disclosure, a program readable by a machine is also provided. When executed by the machine, the program can cause the machine to perform a message receiving method of any of the above mentioned embodiments.

According to the present disclosure, a storage medium which stores a program readable by a machine is also provided. When executing the program, the machine can perform a message receiving method of any of the above mentioned embodiments.

Although certain inventive embodiments of the present disclosure have been specifically described, the present disclosure is not to be construed as being limited thereto. Various changes or modifications may be made to the present disclosure without departing from the scope and spirit of the present disclosure.

## Claims

1. A message sending method, for being executed in a message sending device, the method comprising:
selecting, according to a selection command, a target sending mode for a short message to be sent in existing sending modes, wherein the existing sending modes comprise a burn after reading sending mode and an ordinary sending mode;
determining, when the target sending mode is the burn after reading sending mode, whether the short message is a multimedia message, and converting the short message to a multimedia message when the short message is not a multimedia message; and
inserting an attachment of burn after reading into the multimedia message, and sending the multimedia message carrying the attachment to a message receiving device, for the message receiving device to delete contents included in the multimedia message after opening, according to the attachment.

2. The method of claim 1, further comprising:
inserting a tag of burn after reading into the short message when the target sending mode of the short message to be sent is the burn after reading sending mode; and
displaying the tag of burn after reading in a message window of the short message to be sent.

3. The method of claim 2, further comprising:
converting the short message to be sent, which comprises the tag of burn after reading, to a multimedia message, when the short message is not a multimedia message; and
inserting the attachment of burn after reading into the multimedia message to replace the tag of burn after reading.

4. The method of any of claims 1 to 3, further comprising:
sending the short message to the message receiving device as normal, upon condition that the target sending mode is the ordinary sending mode.

5. A message receiving method, for being executed in a message receiving device, and the method comprising:
receiving a multimedia message sent by a message sending device;
determining whether the multimedia message includes an attachment of burn after reading; and
deleting contents in the multimedia message after the multimedia message has been opened upon a close or exit command being received, when the multimedia message includes an attachment of burn after reading.

6. The method of claim 5, further comprising:
displaying the multimedia message which includes the attachment of burn after reading, wherein the multimedia message is shown in a first style when the multimedia message is received but unopened, and is shown in a second style when the multimedia message has been opened.

7. The method of claim 6, further comprising:
setting the first style and/or the second style according to a setting command.

8. A message sending device, comprising:
a selection unit, which selects a target sending mode for a short message to be sent in existing sending modes, according to a selection command, wherein the existing sending modes comprise a burn after reading sending mode and an ordinary sending mode;
a determination unit, which determines whether the short message is a multimedia message, when the target sending mode is the burn after reading sending mode;
a converting unit, which converts the short message to a multimedia message when the short message is not a multimedia message;
a tag inserting unit, which inserts an attachment of burn after reading into the multimedia message; and
a sending unit, which sends the multimedia message inserted with the attachment to a message receiving device, for the message receiving device to delete contents in the multimedia message after opening according to the inserted attachment.

9. The device of claim 8, wherein:
the tag inserting unit is further used to insert a tag of burn after reading into the short message when the sending mode of the short message to be sent is the burn after reading sending mode; and
the tag inserting unit further comprises: a tag showing unit, which displays the tag of burn after reading in a message window.

10. The device of claim 9, wherein:
the converting unit is further used to convert the short message to be sent, which comprises the tag of burn after reading, to a multimedia message, when the short message is not a multimedia message; and
the tag inserting unit further comprises, a replacing unit, which inserts the attachment of burn after reading into the multimedia message to replace the tag of burn after reading.

11. The device of any one of claims 8 to 10, wherein the sending unit is further used to send the short message to the message receiving device as normal, upon condition that the target sending mode is the ordinary sending mode.

12. A message receiving device, comprising:
a receiving unit, which receives a multimedia message sent by a message sending device;
a determination unit, which determines whether the multimedia message comprising an attachment of burn after reading; and
a processing unit, which deletes contents in the multimedia message after the multimedia message having been opened according to a closed command, when the multimedia message comprises the attachment of burn after reading.

13. The device of claim 12, further comprising:
a displaying unit, which displays the multimedia message which includes the attachment of burn after reading, wherein the multimedia message is shown in a first style when the multimedia message is received but unopened, and is shown in a second style when the multimedia message has been opened.

14. The device of claim 13, further comprising:
a setting unit, which sets the first style and/or the second style according to a setting command.
